# EUROPEAN PATENT APPLICATION

(11) **EP 1 435 314 A1**
(43) Date of publication of application: **07.07.2004**
(21) Application number: 03466003.5
(22) Date of filing: 18.02.2003
(51) Int. Cl.: B60R 25/02

(54) **Device against unintentional blocking of car steering wheel**

(30) Priority: 31.12.2002 CZ 20024274
(71) Applicant: Manek, Ales, 561 53 Dolni Cermna (CZ)
(72) Inventor: Manek, Ales, 561 53 Dolni Cermna (CZ)
(74) Representative: Majetic, Josef

(57) **Abstract**

The invention relates to a device against unintentional blocking of a steering wheel. The device comprises a cam (1) provided with an operating cam (4) for moving a latch (6) in and out of engagement with a steering wheel shaft (8). The latch (6) is provided with a shaft (5) cooperating with the operating cam (4). A movable locking latch (3) on shaft (5) cooperates with a peripheral surface (11) of cam (1). Said surface (11) carries on its frontal surface (12) either a projection (9) or a reverse noth (10) or a combination of both interacting with locking latch (3). As alternative, the peripheral surface (11) may be provided with a reverse auxiliary cam (2).

## Description

### State of An Art

The invention refers to a device against unintentional blocking of car steering wheel, even at the ignition key shifted into switching box, especially when the car is moving without starting, or as the case may be, without an attempt of its switching on with starter.

### Background Of An Invention

With some car types used at present and being made, it can happen at specific way of car use to the situation that it occurs a blocking - locking of the steering wheel even during moving car with a key put inside the switching box. This situation can happen when the car is in the move without an attempt of its starter or even without an attempt of its switching on by starter, for example at driving downhill without motor-car engine being switched. Or by towing a car with another motor vehicle. The dangerousness of this phenomenon lies in generally widespread awareness that with an ignition key shifted into the switching box it cannot happen to the locking up at any case, and therefore to the car steering blocking as long as it has been put into motion.

The situation when it happens the locking up the steering wheel without removal of the key begins in the following way : a starting position is a shut-down vehicle with a locked steering wheel. Now we put the key into the switching box, turn into the position I and continue with the turning into the position II, but we stop the movement of the key before reaching this position at precisely defined place when the latch is lifted up close over a locking position. Some electric circuits of the vehicle are switched now and the steering wheel is unlocked, therefore it is possible to turn with it freely. If we put the vehicle in motion by any way without use of the starter, this vehicle is controllable, operational, and apparently appropriately functional. Now however, from this position, when the movement into the position II was not ended, we are starting to turn the key back into the previous position I, or even 0, it starts immediately the locking up of the steering wheel by locking in spite of the fact that the key was not yet turned back into the initial zero position and was not removed from the switching box.

The cause of this event is the fact that the locking device design of the steering system forms a temporary unstable condition when the steering rod has still been unblocked, however the latch is not yet locked up against the return movement into the locked position by means of pushing out the locking latch. If the key begins to turn back before overcoming this unstable position, the appropriate operations are going in the opposite sequence than it has been in the first phase by turning the key to the right. At first the latch comes down back into the recess in the steering whell and this is blocked, afterwards the key is turned into the 0 position, and till in the end it is possible to pull it out, however the steering wheel has been locked before then even without putting the key out of the switching box even before the movement of the key turning point into the basic starting point.

As long as the lacking latch surpasses and clicks this into position at regular and continuous passage, it comes to the desirable advancement when clicking the latch into position is the last movement of the whole process, therefore after the putting key out of the steering system plug.

### The Substance of an Invention

Above-mentioned drawbacks are removed to a large extent with a device against unintentional blocking of car steering wheel even with the ignition key in the switching box, especially when the vehicle is moving without starting, or as the case may be, without an attempt of its switching on with starter, the substance of which lies in the fact that a projection is formed on the frontal surface of the cam, or a reverse notch, appropriately the combination of both these solutions, for prevention of the reverse movement to click shut the latch on the peripheral surface, or a reverse auxiliary cam is formed, which at the specific movement provides the clicking of locking latch into position.

For the proper function of the device with the solution of a projection, a reverse notch, appropriately their combinations, it is necessary to end rotating in the initial direction up to desirable position, when there is not possible the reverse spontaneous mevement of a latch because it has already occured the clicking of locking latch on the peripheral surface of the clicking fixture.

The requirement of the proper function of the device with the solution of a reverse auxiliary cam is, that the point where the locking latch is snapping onto a guide surface of the reverse auxiliary cam, is the nearest to the axis of the clicking fixture rotation and all other points on the peripheral surface of the reverse auxiliary cam have over and over again bigger and bigger distance from the centre of rotation. It follows from this that after snapping shut of the locking pin on the surface of the reverse auxiliary cam has been this locking pin even with latch only lifted up, regardless of the direction of rotation of the clicking fixture, or more precisely, the direction of rotation of the key in the plug.

This solution seems to be particularly advantageous for its simplicity and possibility of easy additional application even with the device being made earlier.

### An Outline of Drawings on Designs

On all following drawings, with the exception of axonometric glances, the mechanism for clearness is depicted in the position, when there is a glance against the direction of plugging the key into the plug of the locking device. The ratchet fixture is then rotating from this glance at unlocking and starting the vehicle to the left. By rotating to the right there is on these drawings caught on the procedure at locking the steering system before removing the key from the plug out of the steering device.

An invention will be explained in greater details by means of the designs on which drawings 1 through 5 are depicting individual phases of function the mechanism with reverse auxiliary cam with line projection, in particular a) always an outline and side projection, b) axonometric projection approximately at the axis of steering wheel shaft, and c) axonometric projection turned about of 60°. On drawing 6 there are depicted some possible forms of the reverse auxiliary cam, in particular with a) line projection, b) concave projection, c) convex projection, d) irregular convex projection. On drawing 7 there are variants with arrangements on the frontal surface of the cam, in particular, a) with a projection, or b) with a notch.

### An Example of Performance of an Invention

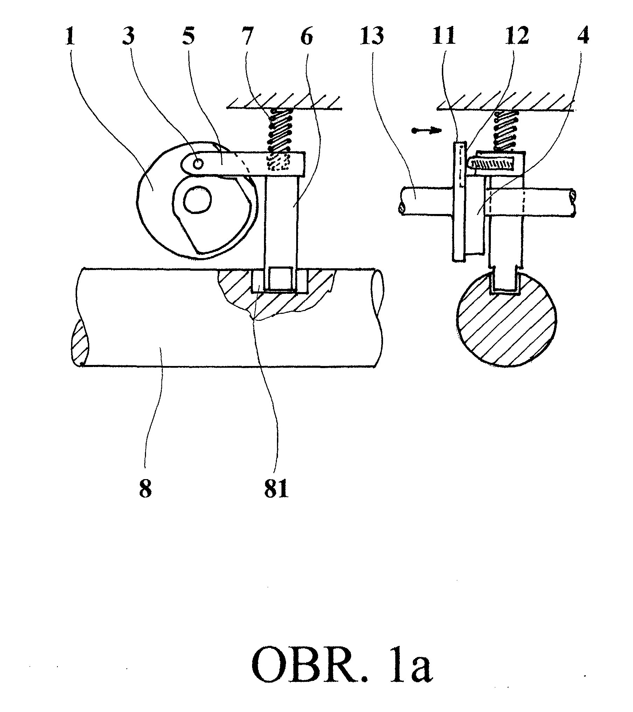

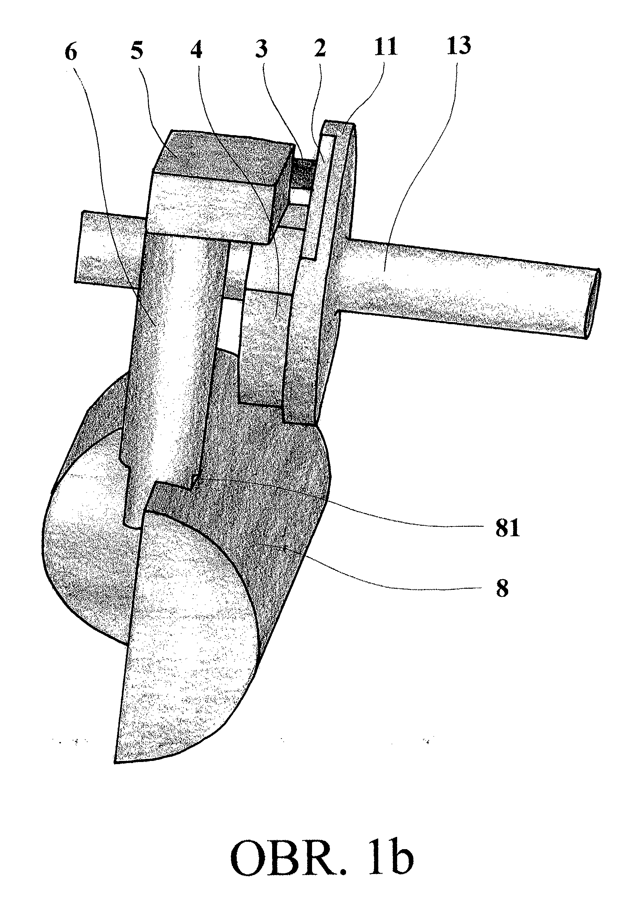

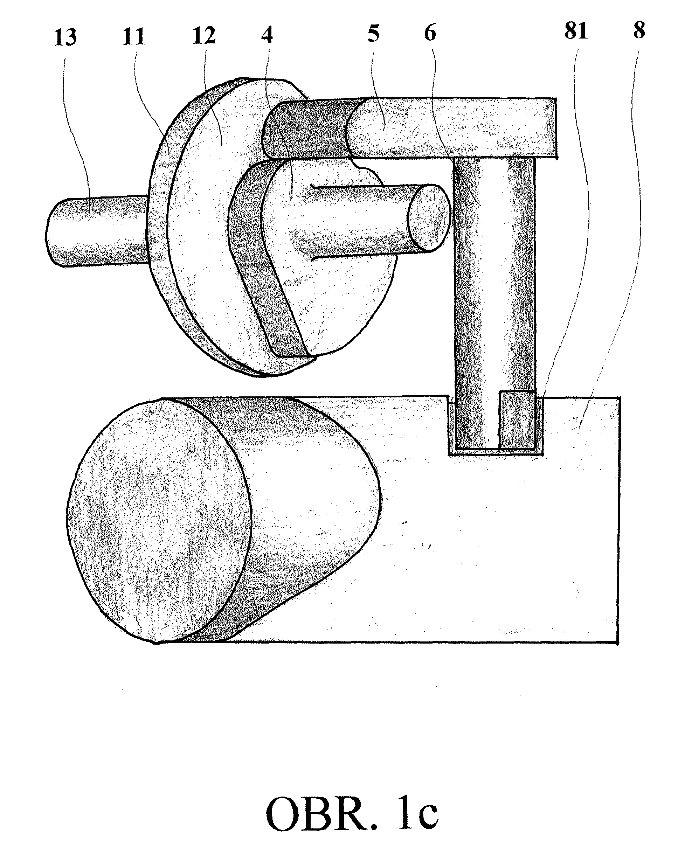

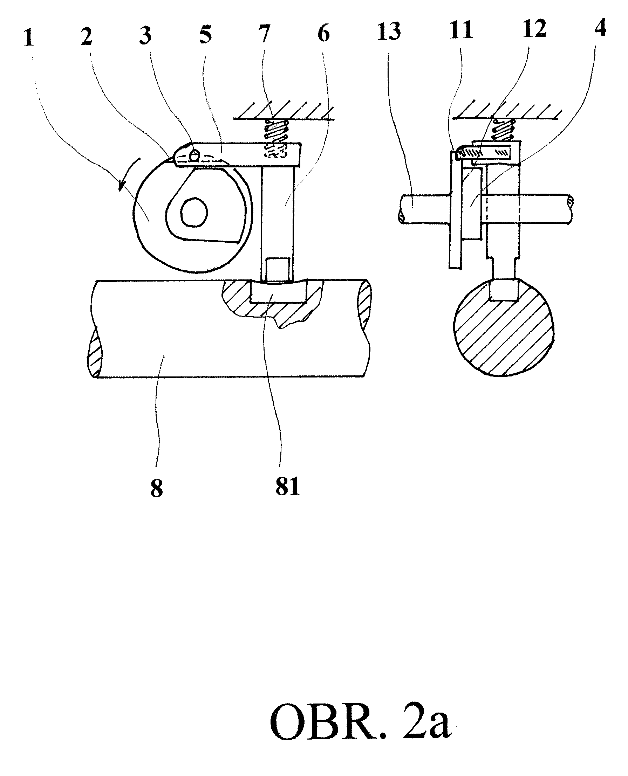

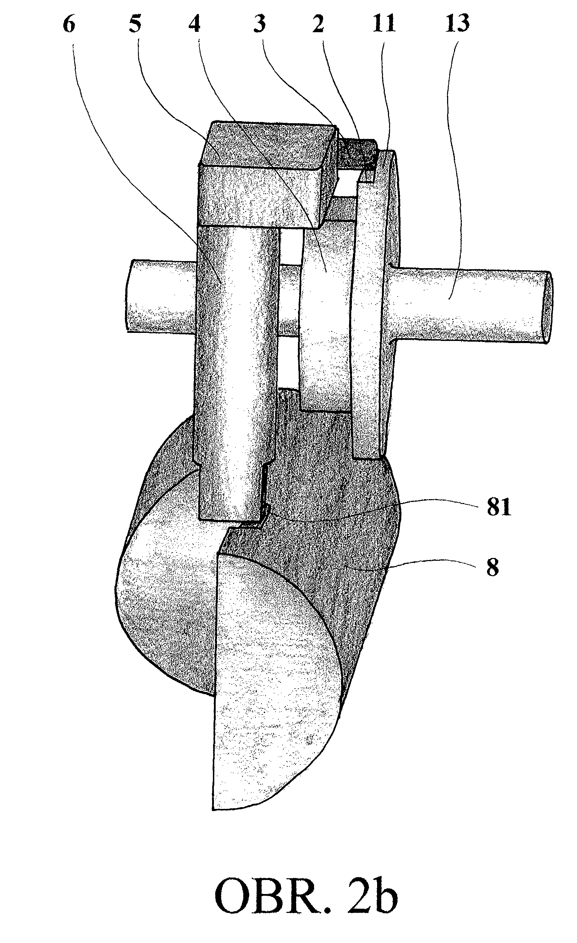

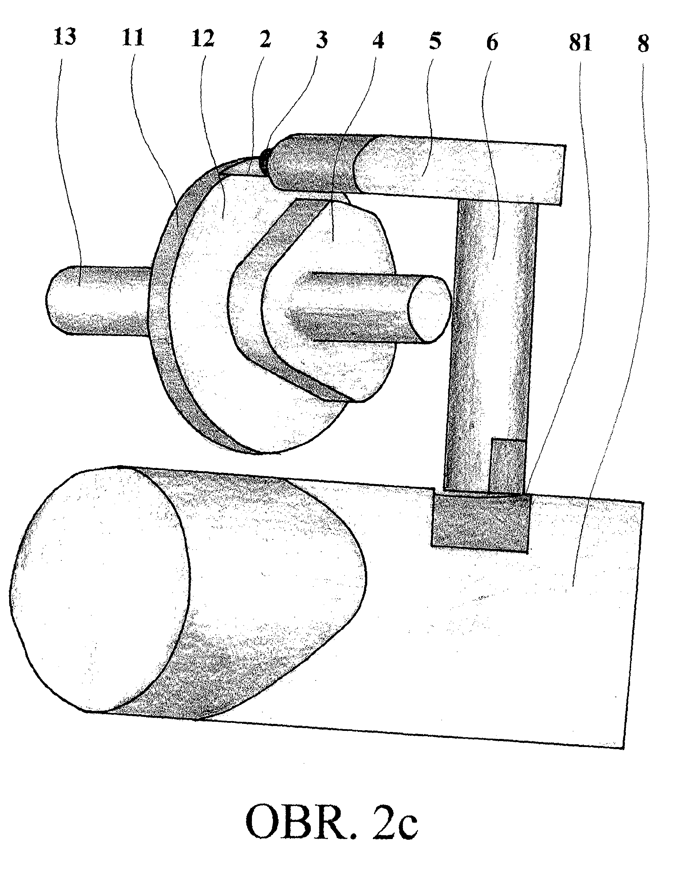

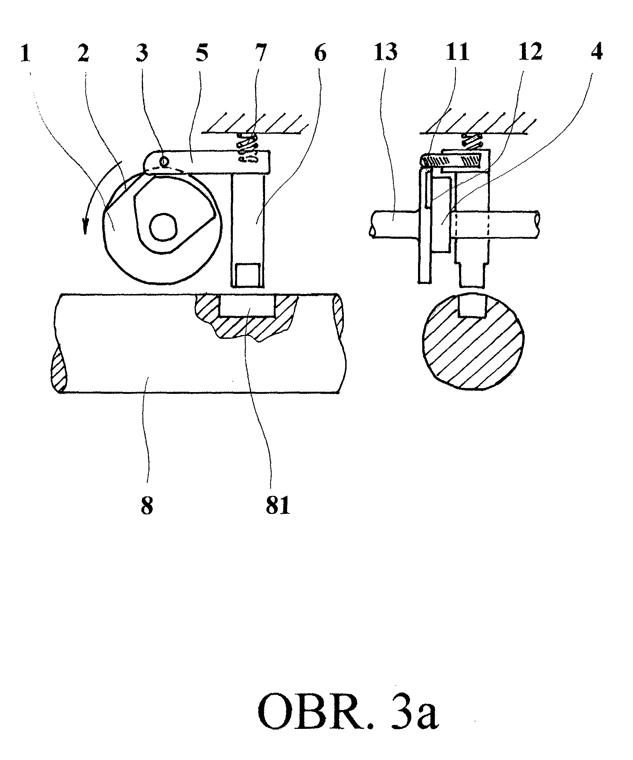

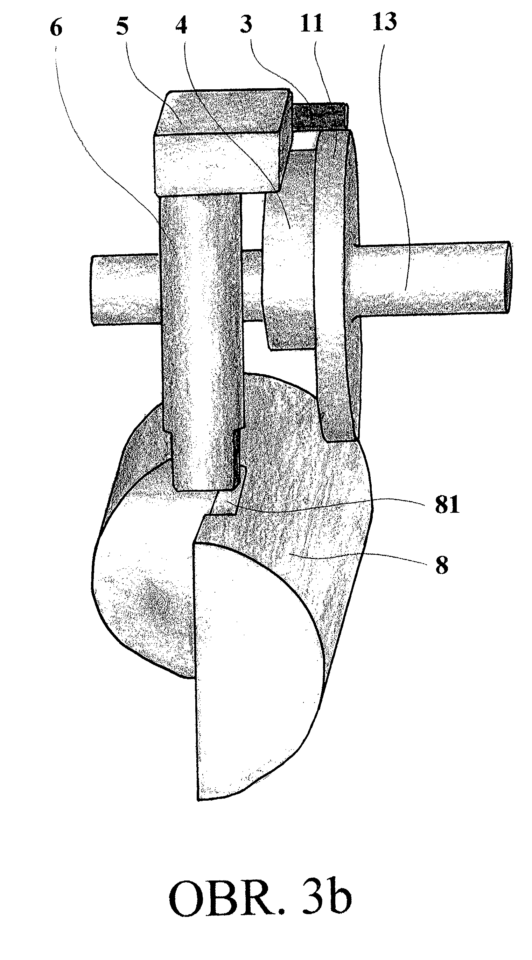

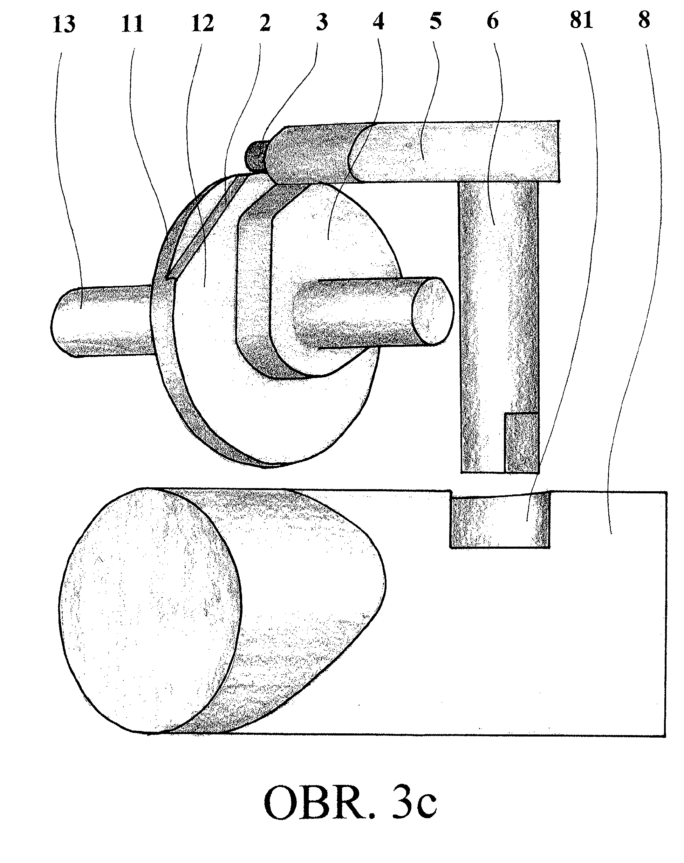

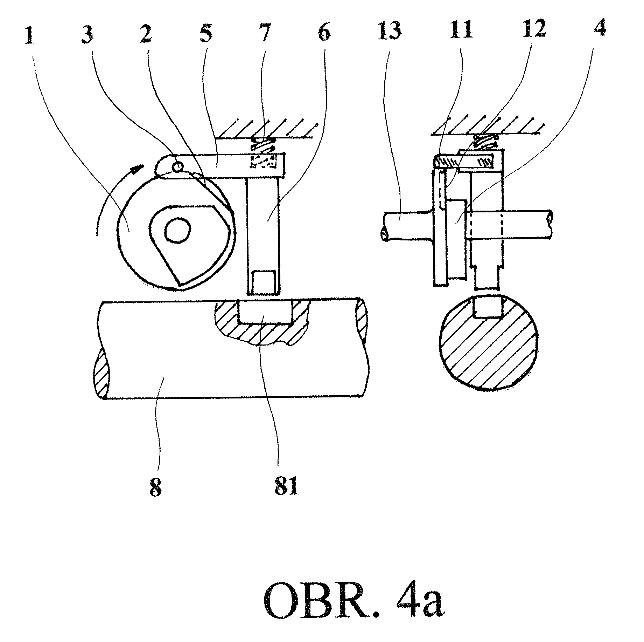

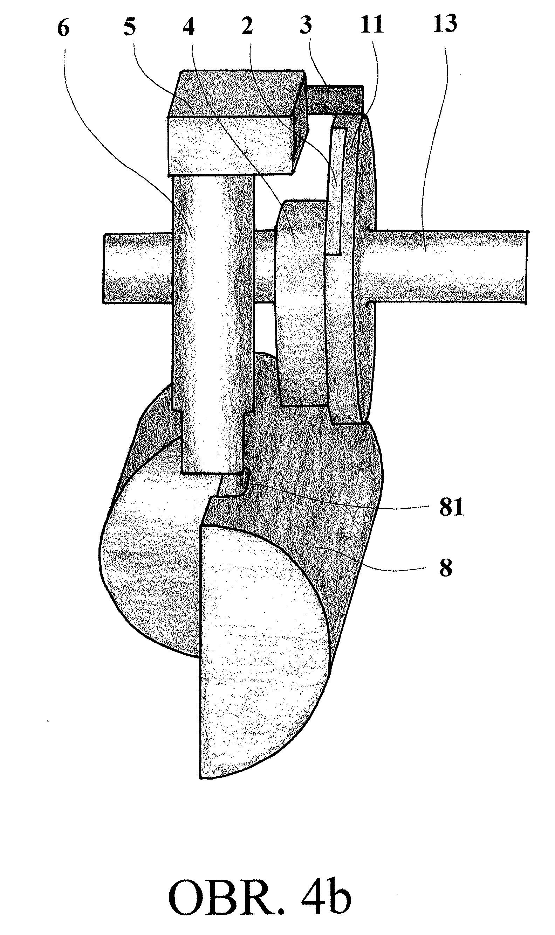

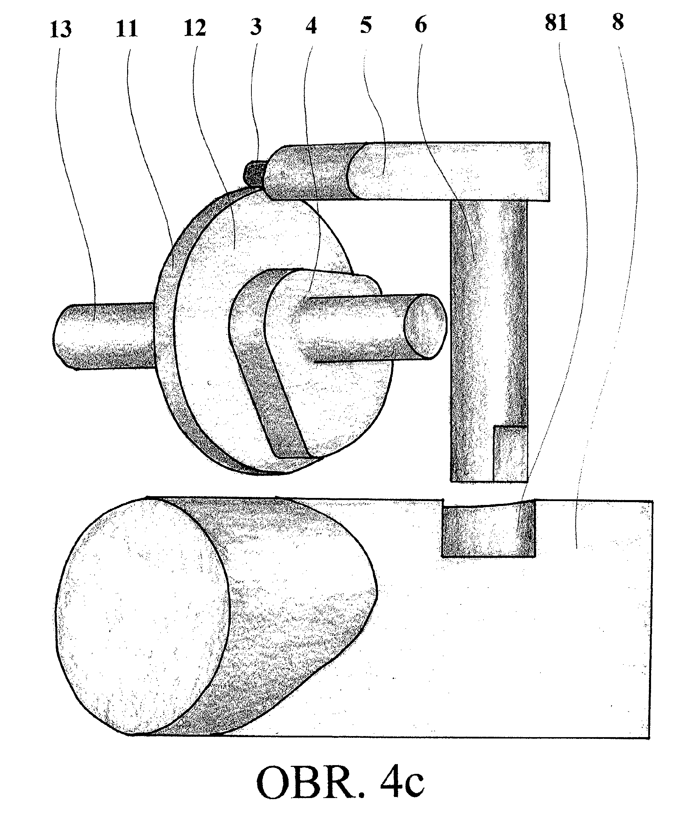

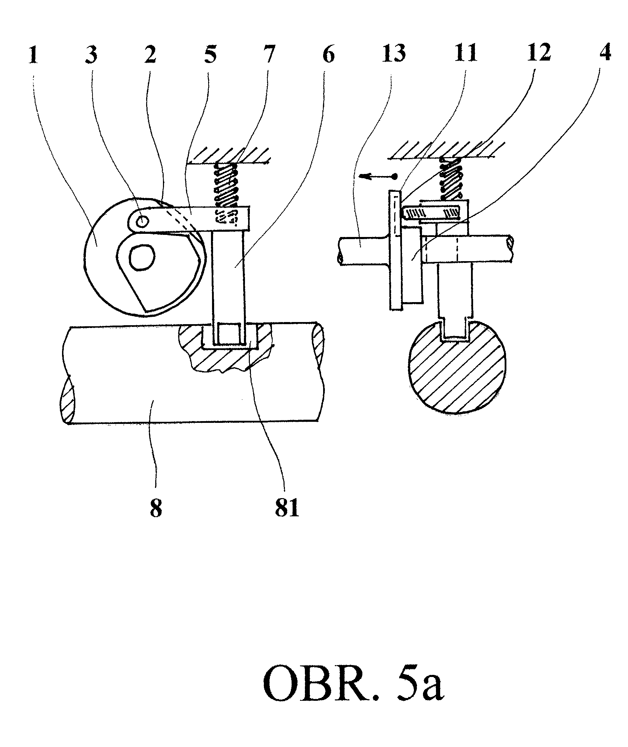

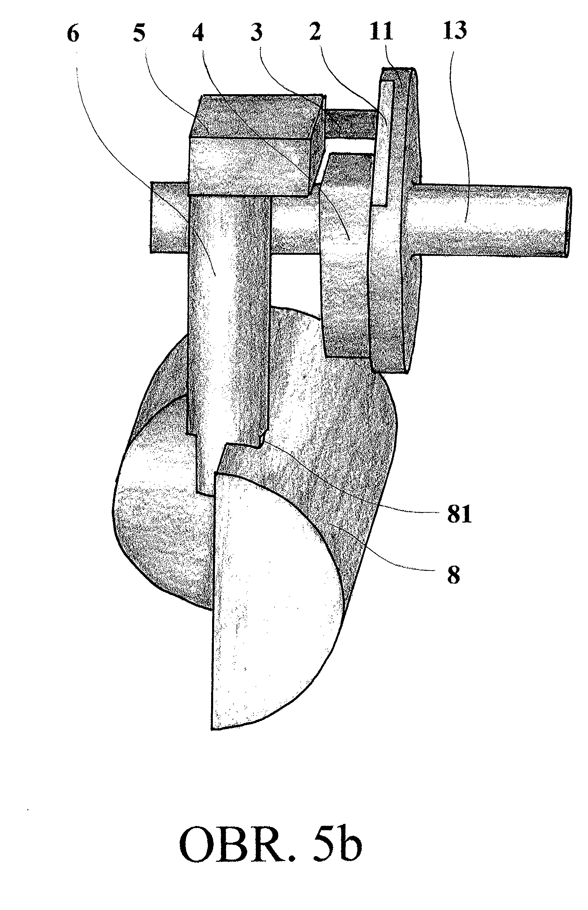

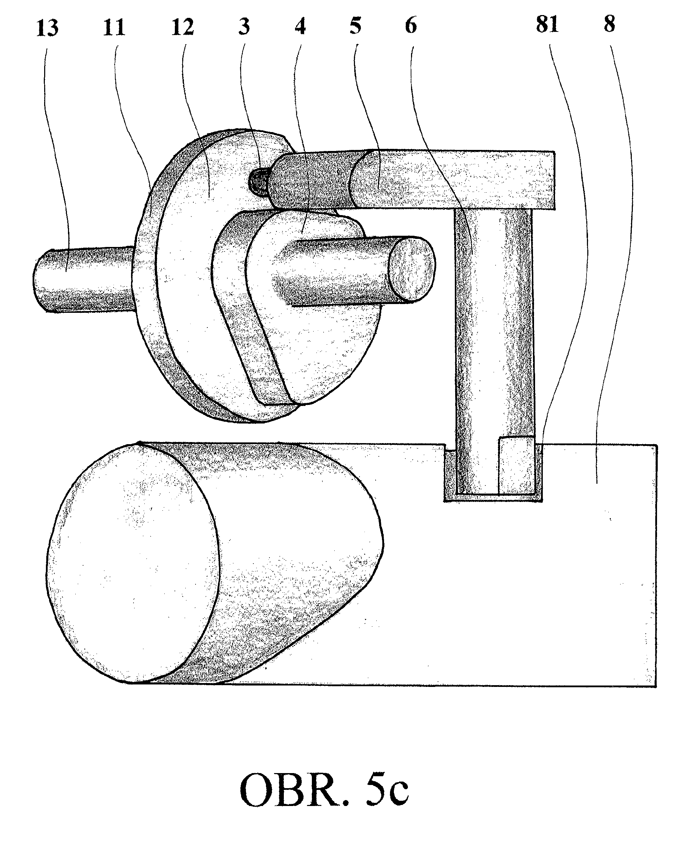

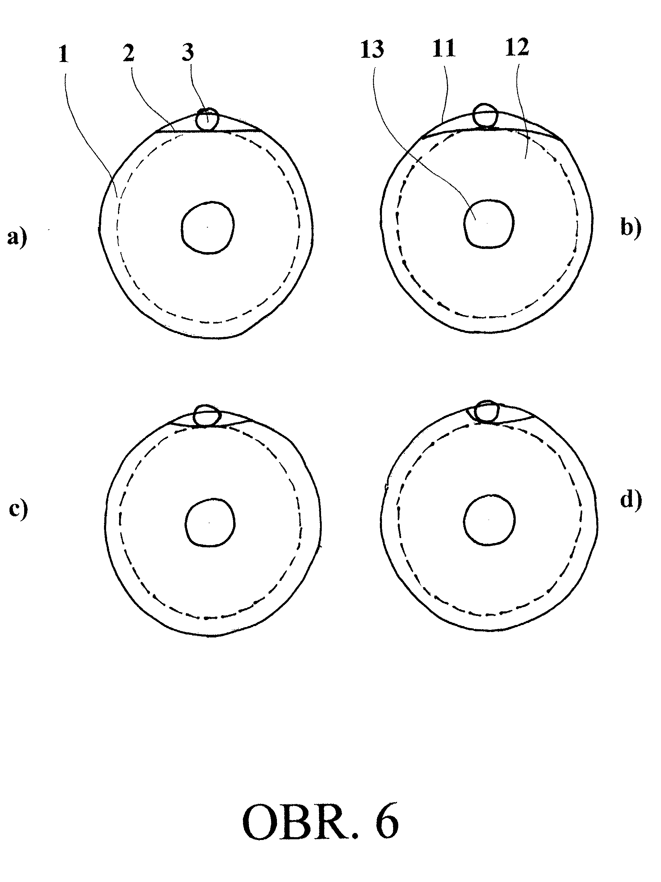

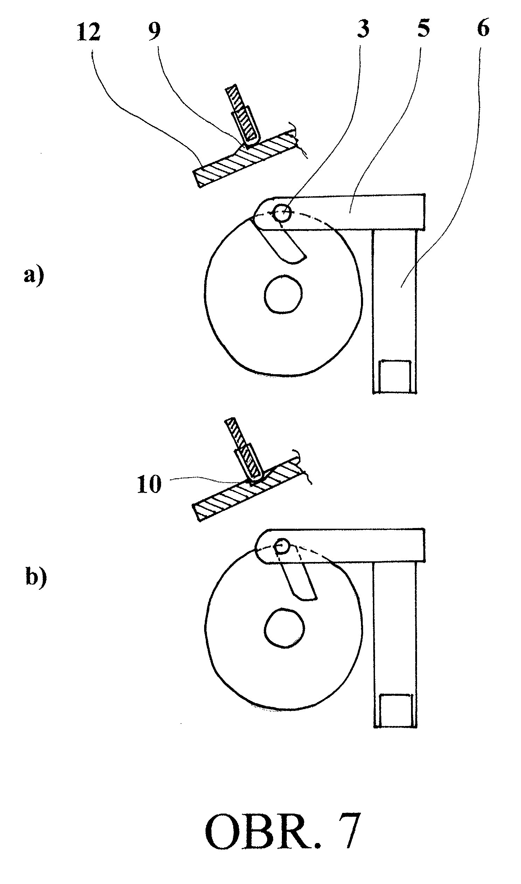

A device according to drawings 1 through 5 consists of a steering wheel shaft 8, into which blocking cavity 81 engages a latch 6 which is constantly pressed down with a spring 7. The movement of the shaft 6 is derived across the arm of the operating cam 4 over which an arm of the shaft 5 is sliding. Inside an arm of the shaft 5 there is a locking latch 3 whose position is controlled with the frontal surface 12 of the cam 1, a reverse auxiliary cam 2 formed on the frontal surface 12 of the cam 1, and a peripheral surface 11 of the cam 1. The cams 1, 2 and 4 are firmly located on the common shaft forming the fixture of cams 13. The forms of the reverse auxiliary cam 2 according to Draw. 6 can be various, however as the most advantageous from the point of course, and especially additional arrangements on already existing parts, it seems the variant with line projection.

The device according to Draw. 7 has on its frontal surface 12 formed a projection 9 or a reverse notch 10, appropriately a combination of both of them, into which a locking latch 3 is engaged.

The function of a device according to an invention is obvious from the Draw. 1 through 5 which depict the individual phases of the whole process. On Draw. 1 (Phase 1) there is depicted a moment after an insertion the key into plug of the lock, and a moderate turning the result of which an axial slide of cam body 13 happened in the direction of an arrow, the latch 6 is fully clicked into a blocking hollow 81, and therefore the shaft on a steering wheel 8 is blocked. On Draw. 2 (Phase 2) there is depicted a moment when the latch 6 is lifted up and is immediately before the position of unblocking of the shaft of the steering wheel 8 which is not to be possible to turn. This position has been chosen for forming reverse auxiliary cam 2 on the frontal surface 12 of the cam 1. On Draw. 3 (Phase 3) there is depicted a moment of switching a locking latch 3 from the reverse auxiliary cam 2 to the external peripheral surface of the cam 11. To this condition it has come at normal and regular process of rotating the key in the plug of the locking device of the steering system. This is therefore the point of the current procedure at which the reverse auxiliary cam 2 is unnecessary, however the function of device is influenced in under no circumstances. For lifting the latch 6 with a locking latch 3 into upper dead centre it came by acting the existing of the operating cam 4 which is a part of the cam body 13. On Draw. 4 (Phase 4) there is caught the moment of shifting a locking latch 3 from the reverse auxiliary cam 2 to the outer peripheral surface 11 of the cam 1. To this condition it occured thereafter when it has begun a backward motion from the critical point. Because the removal of locking latch 3 happened at the point which is nearest to the axis of rotation, the locking latch 3 was taken out on the outer peripheral surface 11. If the reverse auxiliary cam 2 was not present here, it might happen at this proceeding to the reverse movement of the latch 6, therefore to its insertion into the blocking hollow 81 of the steering wheel shaft 8. On Draw. 5 (Phase 5) there is a moment when an axial shifting of the cam body 13 has already happened and the latch 6 has been inserted into the blocking hollow 81 of the steering whell shaft 8. The locking latch 3 came down on the frontal surface 12 into a starting point. Any further movement is only such movement preceding the position of Phase 1, therefore a moderate rotating with the axial shifting of the cam body 13.

The function of a device according to an invention with formed projection 9 or reverse notch 10 on the frontal surface 12, is the same as in the preceding case, only that there is made impossible a reverse movement before locking latch 3 on the peripheral surface 11. This provision requires ending of rotation in the initial direction up to the required position when there is no more possible the spontaneous movement of the latch 6, because it has already happened to the latching of the locking latch 3 on the peripheral surface 11.

### The Industrial Utility

The device according to the invention removes dangerousness of the situation when at the specific way of use the vehicle it can occur the blocking - the locking of the steering wheel even with the movement of the vehicle with inserted key into the switching box, for example at driving downhill, and/or at towing the vehicle with another one.

### The List of Relational Marks

- 1 -: cam
- 11 -: peripheral surface of a cam
- 12 -: frontal surface
- 13 -: cam body
- 2 -: reverse auxiliary cam
- 3 -: locking latch
- 4 -: operating cam
- 5 -: arm of the shaft
- 6 -: latch
- 7 -: spring
- 8 -: steering wheel shaft
- 81 -: blocking cavity
- 9 -: projection
- 10 -: notch

## Claims

1. The device against unintentional blocking of the steering wheel of the car even with inserted key into the switching box, in particular when the vehicle is in the move without starting engine, respectively even without an attempt of its starting with starter, **distinguished itself by**, that on the frontal surface (12) of the cam (1) there is formed a projection (9) or a reverse notch (10), appropriately the combination of both of these solutions, for prevention of the reverse movement before clicking shut the latch (6) on the peripheral surface (11), or a reverse auxiliary cam (2) is formed, which at the specific moment provides the clicking of the locking latch (3) into position.
